# EUROPEAN PATENT APPLICATION

(11) **EP 2 997 929 A1**
(43) Date of publication of application: **23.03.2016**
(21) Application number: 14797398.6
(22) Date of filing: 24.02.2014
(51) Int. Cl.: A61C 11/00, A61C 19/05

(54) **ARTIFICIAL TEETH ARTICULATOR**

(30) Priority: 15.05.2013 KR 20130054933
(71) Applicant: EQ CO., LTD., Gyeonggi-do 17064 (KR)
(72) Inventor: CHA, Sun Joo, Goyang-si Gyeonggi-do 410-315 (KR); KIM, Ki Jeong, Yongin-si Gyeonggi-do 448-170 (KR); KIM, Jong Hwa, Gyeonggi-do 423-755 (KR)
(74) Representative: Regimbeau
(86) International application number: PCT/KR2014/001481
(87) International publication number: WO 2014/185623

(57) **Abstract**

An artificial teeth articulator according to the present invention has a structure comprising: a height control means installed between a holder and a table, for controlling the height of the table installed on a base plate and a top plate by using the holder; a width control means installed on the table, for controlling individually from five directions the width of a tray seated on the table so that the periphery of the tray is held by means of pressing force; and a jaw gap control means installed so that the horizontal tilt of the table can be individually controlled from three different directions through graduations formed on a support rod, when supporting the table by vertically sliding along the outer circumference of the support rod. As a result, more accurate control is enabled so that the jaws can be more real-istically and closely recreated, and the advantages of a simpler structure and operation, and minimization of margin of error can be provided.

## Description

### [Technical Field]

The present invention relates to an artificial teeth articulator and, more particularly, to an artificial teeth articulator that can achieve an accurate inter-jaw relationship (jaw gap) in a mouth of a patient.

### [Background Art]

In general, a dental articulator, a necessary device for manufacturing prosthesis, can be considered as an artificial mechanical jawbone arranging artificial teeth at their specific positions and used to make mandibular movement following temper mandibular joint movement.

Articulators are manufactured in various types and range from a very simple opening/closing type to a very complicated and precise type. Generally such articulators are classified into a non adjustable articulator, a semi adjustable articulator, and a fully adjustable articulator in accordance with the degree of adjustment.

The non adjustable articulator is classified into a hinge type articulator and an average movement articulator, and the hinge type articulator, which is the simplest articulator, cannot perform structural adjustment, but can only open/close up/down or make lateral movement in a limited range.

The average condylar guidance angle of the average movement articulator is fixed close to 30°, but condylar guidance angles of people are actually different so the conventional movement articulator cannot be appropriately adjusted. Further, only occluding centric relation occlusion between upper and lower jaws is required to attach a model to the articulator, so the condylar guidance cannot be adjusted in any way, but the upper jaw can be moved, and accordingly lateral movement can be achieved.

The semi adjustment articulator has a mechanical characteristic of adjustable condylar guidance and can be adjusted by occluding centric relation occlusion, protrusive interocclusal record, and lateral interocclusal record, so it is possible to manufacture better artificial teeth or restorative prostheses as compared to using a non adjustable articulator.

The fully adjustable articulator can considered as being the most precise articulators, but is more complicated in structure than the semi adjustment articulator, so more complicated preparation and operation are required to use this articulator, and thus it is difficult to be used as a commercial product.

Dental laboratories selectively use these articulators, depending on their characteristics, in which the hinge type articulator in the non adjustable articulators little used, but the average movement articulator is used for a temporary denture or a simple crown and bridge. Further, the semi adjustment articulator that is used in various dental fields is used as an articulator for manufacturing a complete denture and a partial denture.

The fully adjustable articulator that is relatively less used is usually used in a full mouth reconstruction process, but dentists or dental mechanics have to be educated and acquire experience in relation to articulation theory after completing a specific education process in order to use the fully adjustable articulator well.

Of the mentioned articulators, the non adjustable articulator has a problem with a crown and bridge and with the articulation relationship in manufacturing of the crown and bridge, in which the hinge type articulator can make only up-down movement, but cannot make lateral movement or protrusive movement of a lower jaw, and the average movement articulator cannot make a little lateral movement, but patients have different ranges in such lateral movement, so it take long time to adjust articulation in a clinic.

The semi adjustment articulator that can supplement the defects of the non-adjustable average movement articulators can be efficiently used to manufacturing a free end, a partial denture, and a complete denture, but when there are natural teeth left, it is difficult to completely reproduce the movement along wear facets of the natural teeth with the articulator, so it is difficult to reproduce accurate movement of a lower jaw because the movement of lower jaws of patient is changed much in the process of recording the relationship between a jaw joint and a maxilla.

Further, the semi adjustment articulator has to give a wear facet capable of increasing the efficient of manufacturing a crown and bridge and other restorative prostheses, but it is difficult to completely reproduce the movement along wear facets ofremaining teeth.

On the other hand, dental mechanics who work in dental laboratories manufacture all of prostheses with reference to models of patients' teeth and instructions from dentists without seeing the patients in person, so it is effective to use the movement of the lower jaws of the patient recorded on the models in order to manufacture more precise prostheses in this environment.

Further, even the fully adjustable articulator that is now actually used has a structural limit in complete reproduction of movement of lower jaws of patients, and is difficult to operate, so the use of this articulator is limited to the full mouth reconstruction process.

### [Disclosure]

### [Technical Problem]

Accordingly, the present invention has been made keeping in mind the above problems occurring in the prior art, and an object of the present invention is to minimize the range of an inter-jaw difference with simple structure and operation to be able to precisely reproduce an inter-jaw relationship (jaw gap) of a patient with an articulator.

### [Technical Solution]

In order to accomplish the above object, the present invention provides an artificial teeth articulator that includes: a base plate; a pair of left and right support bars vertically fixed at left and right sides at a rear portion ofthe base plate; a top plate hinge-coupled to tops of the pair of left and right support bars to rotate up and down; a front support bar vertically coupled to a center of a front portion of the top plate, with a lower end seated at a front portion of the base plate; a pair of upper and lower tables detachably coupled to centers ofthe base plate and the top plate by holders, which can be horizontally adjusted, and supporting upper and lower trays adjusted for an inter-jaw relationship in the mouth of a patient, and the artificial teeth articulator includes: height control mechanisms connecting the tables and the holders to each other and adjusting height of the tables; width control mechanisms disposed close to edges of the tables and horizontally supporting and moving the upper and lower trays in various directions; and jaw gap control mechanisms disposed at middle portions of the pair of left and right support bars and the front support bar and adjusting height of the pair of upper and lower tables at different levels to reproduce an inter-jaw relationship adjusted in accordance with the mouth of a patient.

As another embodiment, the height control mechanism includes a fixing pin vertically protruding from a bottom of the table, a connection tube having a insertion hole at an upper end to insert the fixing pin and adjust height and a lower end fixed to the holder, and a fastening bolt thread-fastened through a side ofthe connection tube and fixing the fixing pin after the fixing pin is adjusted in height with respect to the connection tube.

As another embodiment, the width adjustment mechanism includes a plurality of oblong holes formed along the edge of the table 80, with longitudinal ends facing the center of the table, pressing portions having a vertical threaded-shaft to adjust a width position ofthe upper tray or the lower tray at a center on a top of the table and hold the tray with a pressing force by moving in the oblong holes, and nuts thread-fastened to the threaded-shafts and stopping the pressing portions after the pressing portions are moved on the top ofthe table by being tightened.

As another embodiment, in the oblong holes, two are formed at left and right sides of a rear portion of the table, one is formed at a center of the front portion, and the other two are formed at left and right sides from a center.

As another embodiment, the jaw gap control unit includes a scale formed at a middle portion of the pair of left and right support bars and the front support bar, a slider fitted on the pair of left and right support bars and the front support bar and sliding up and down with an upper end aligned with the scale to adjust height, a fastening bolt thread-fastened through a side of the slider to stop the slider after the height is adjusted, and an adjusting pin horizontally protruding from an upper end of the slider, aligned with the upper end ofthe slider, and pushing the table in accordance with an inter-jaw relationship adjusted in accordance with the mouth of a patient.

As another embodiment, the scale is formed with 1mm intervals over and under a zero point.

### [Advantageous Effects]

According to an artificial teeth articulator of the present invention, height control mechanisms are disposed between holders and tables to adjust height of the tables coupled to a base plate and a top plate by holders, width control mechanisms are coupled to the tables to independently adjust height trays on the tables in five directions and hold the edges of the trays with a pressing force, and a jaw gap control mechanisms adjusting horizontal inclination of the tables at different levels in three directions through scales on the support bars when they slide up and down along the support bars while supporting the tables. Therefore, it is possible to precisely adjust the height and width to be closer to the actual inter-jaw relationship and it is also possible to minimize a jaw gap difference with simple structure and operation.

### [Description of Drawings]

Fig. 1 is an exploded perspective view showing an articulator according to the present invention.
Fig. 2 is a side view showing the articulator according to the present invention.
Fig. 3 is an exploded perspective view showing a height control mechanism and a width control mechanism for a table according to the present invention.
Fig. 4 is a side view showing the table coupled to a base of the articulator according to the present invention.
Fig. 5 is a side view showing a jaw gap control mechanism on a support bar according to the present invention.

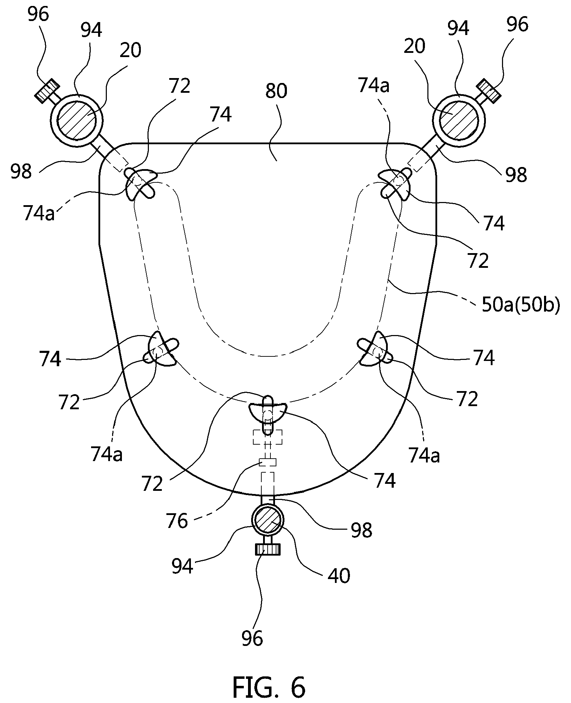

Fig. 6 is a plan view showing the height control mechanism and the width control mechanism for a table according to the present invention.
Figs. 7A and 7B are perspective views showing first and second diagnosis templates that are coupled to an articulator by connectors according to the present invention.
Figs. 8A and 8B are schematic plan view showing upper and lower trays that are temporarily fixed to the table according to the present invention.

### [Mode for Invention]

Hereinafter, embodiments of the present invention will be described in detail with reference to the accompanying drawings.

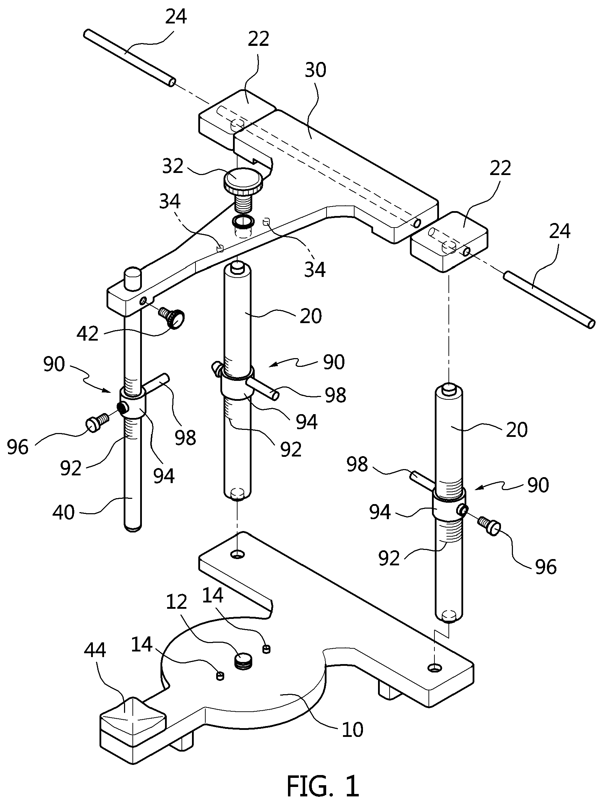

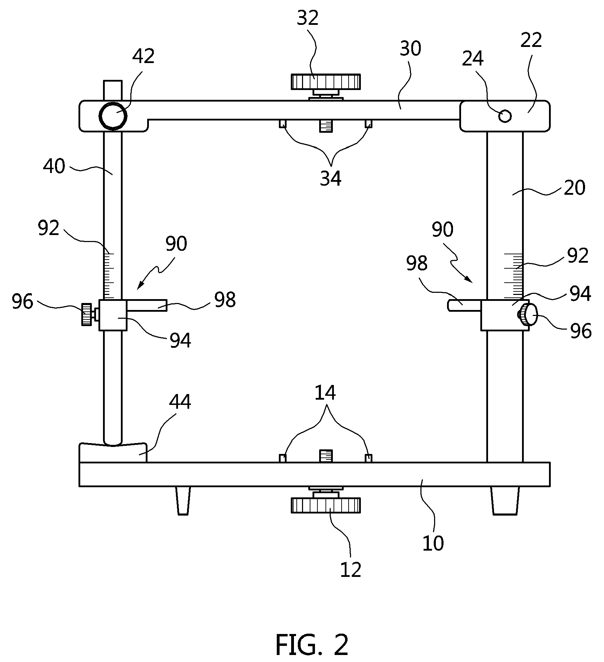

An artificial teeth articulator of the present invention, as shown in Figs. 1 and 2, includes: a base plate 10; a pair of left and right support bars 20 vertically fixed at the left and right sides at the rear portion of the base plate 10 and having an hinge bbck 22 at the tops; a top plate 30 hinge-coupled to the tops ofthe pair of left and right support bars 20 by a pair of left and right hinge shafts 24 horizontally passing through the hinge blocks 22 to rotate up and down; a front support bar 40 vertically passing through the center ofthe front portion ofthe top plate 30, with the upper end coupled by a fastening member 42 and the lower end seated on a base block 44 coupled to the front portion of the base plate 10; a pair of upper and lower tables 80 detachably coupled to the centers ofthe base plate 10 and the top plate 30 by holders 82, which can be horizontally adjusted, and supporting upper and lower trays 50a and 50b adjusted for an inter-jaw relationship in the mouth of a patient; height control mechanisms 60 connecting the tables 80 and the holders 82 to each other and adjusting the height ofthe tables 80; width control mechanisms 70 disposed close to the edges of the tables 80 and horizontally supporting and moving the upper and lower trays 50a and 50b in various directions; and jaw gap control mechanisms 90 disposed at the middle portions of the pair of left and right support bars 20 and the front support bar 40 and adjusting the height of the pair of upper and lower tables 80 at different levels to reproduce an inter-jaw relationship adjusted in accordance with the mouth of a patient.

That is, fastening members 12 and 32 have threaded portions passing through the base plate 10 and the top plate 30, respectively, and handles outside the plates are arranged vertically symmetrically to each other, and a plurality of front and rear fixing protrusions 14 and 34 protruding inward is fixed on the center lines of the plates with the fastening members 12 and 32 therebetween.

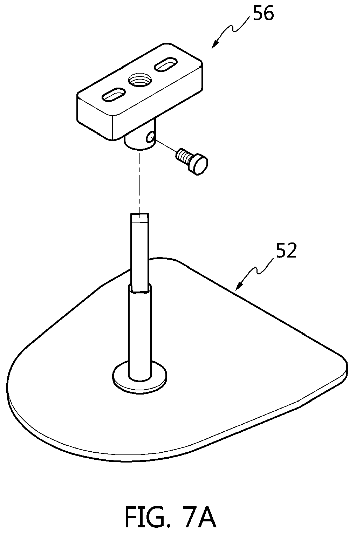

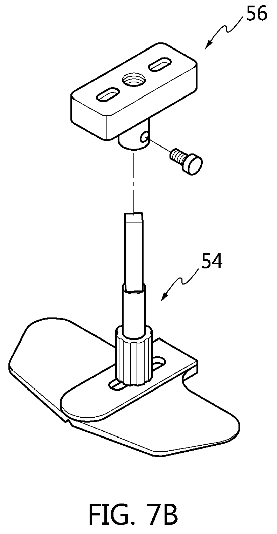

The tables 80 are vertically symmetrically coupled to the fastening members 12 and 32 and the fixing protrusions 14 and 34 to be positioned in selected rotational directions, a first diagnosis temperate 52 or a second diagnosis temperature 54 is selectively coupled to the fastening member 32 and the fixing protrusions 34, as shown in Figs. 7A and 7B, and a connector 56 is coupled thereto to adjust height.

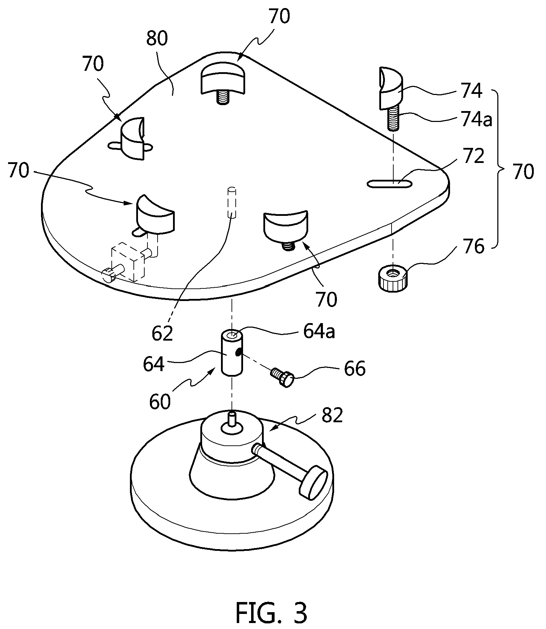

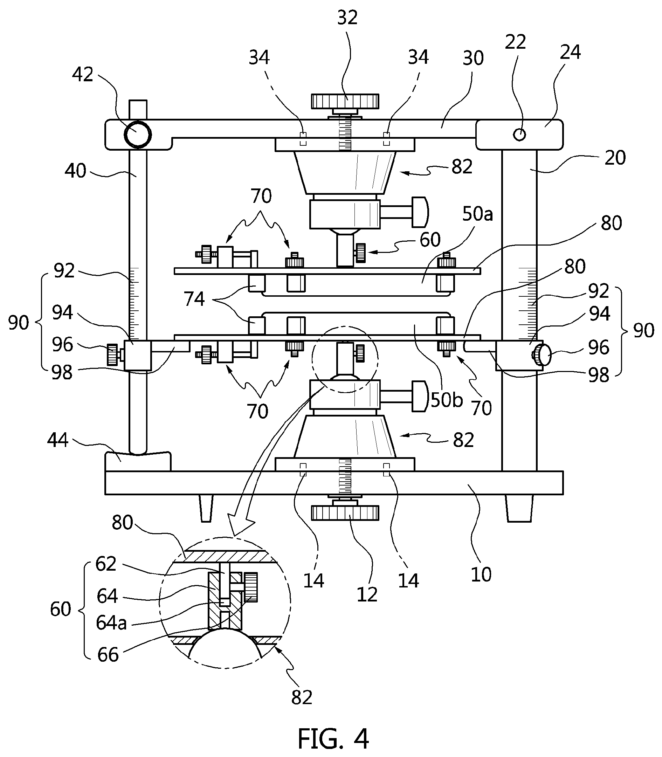

The height control mechanism 60, as shown in Figs. 3 and 4, includes a fixing pin 62 vertically protruding from the bottom of the table 80, a connection tube 64 having a insertion hole 64a at the upper end to insert the fixing pin 62 and adjust height and a lower end fixed to the holder 82, and a fastening bolt 66 thread-fastened through a side of the connection tube 64 and fixing the fixing pin 62 after the fixing pin 62 is adjusted in height with respect to the connection tube 64.

The width control mechanism 70, as shown in Figs. 3 and 4, includes a plurality of oblong holes 72 formed along the edge of the table 80, with the longitudinal ends facing the center of the table 80, pressing portions 74 having a vertical threaded-shaft 74a to adjust the width position of the upper tray 50a or the lower tray 50b at the center on the top of the table 80 and hold the tray with a pressing force by moving in the oblong holes 72, and nuts 76 thread-fastened to the threaded-shafts 74a and stopping the pressing portions 74 after the pressing portions 74a are moved on the top ofthe table 80 by being tightened.

Of the oblong holes 72, two are formed at left and right sides ofthe rear portion of the table 80, one is formed at the center of the front portion, and the other two are formed at the left and right sides from the center.

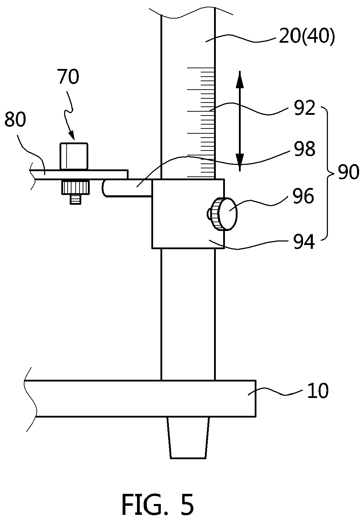

The jaw gap control unit 90, as shown in Fig. 5, includes a scale 92 formed with 1mm intervals over and under a zero point at the middle portion of the pair of left and right support bars 20 and the front support bar 40, a slider 94 fitted on the pair of left and right support bars 20 and the front support bar 40 and sliding up and down with the upper end aligned with the scale 92 to adjust height, a fastening bolt 96 thread-fastened through a side ofthe slider 94 to stop the slider 94 after the height is adjusted, and an adjusting pin 98 horizontally protruding from the upper end ofthe slider 94, aligned with the upper end of the slider 94, and pushing the table 80 in accordance with an inter-jaw relationship adjusted in accordance with the mouth of a patient.

Next, operation and effect of the artificial teeth articulator having this configuration of the present invention are described.

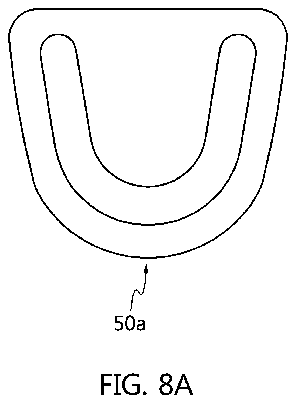

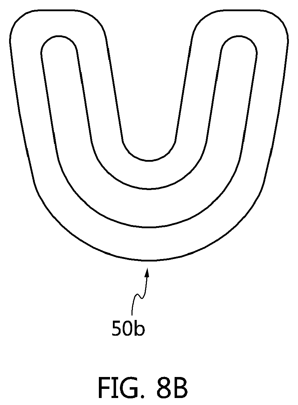

In order to reproduce a inter-jaw relationship adjusted in accordance with the mouth of a patient with the articulator of the present invention, the upper tray 50a and the lower tray 50b adjusted for an inter-jaw relationship in the mouth of a patient, as shown in Figs. 8A and 8B, are supported to face each other by the tables 80 and then arranged to reproduce the inter-jaw relationship.

That is, the upper tray 50a and the lower tray 50b are adjusted in the degree of horizon and height with respect to gums of a patient that are irregular in height around a cone die in accordance with the inter-jaw relationship such that the gums are comfortable, and then the gap between the upper tray 50a and the lower tray 50b is adjusted to provide a space where artificial teeth can be arranged later in an articulator.

For example, the distance from a horizontal center line, which equally divides the gap between the upper tray 50a and the lower tray 50b into two parts, to the lower end of the upper tray 50a is set to 12.5mm or less and the distance from the horizontal line to the upper end of the lower tray 50b is set to 10mm or less, using a measurer to achieve optimal articulation when artificial teeth are filled and the trays are articulated.

The upper and lower trays 50a and 50b manufactured in this way are separated from the mount of the patient, moved to the tables 80 of the articulator capable of reproducing the inter-jaw relationship in the mouth of the patient, and then artificial teeth are arranged. The artificial teeth arranged on the lower tray 50b are adjusted in height to fit the inter-jaw relationship by the pressing force from the first diagnosis temperate 52 and the second diagnosis temperate 54, this articulation is examined in the mouth of the patient, and then it is sent to a dental laboratory and cured therein to manufacture a denture.

That is, as in Fig. 4, the upper tray 50a is held under the table 80 coupled to the top plate 30 of the articulator by the holder 82 and adjusted in width in several directions by the pressing portions 74 of the width control mechanism 70, while the lower tray 50b is held on the table 80 coupled to the base plate 10 of the articulator by the holder 82 and then adjusted in width in several directions by the width control mechanism 70, thereby reproducing the inter-jaw relationship in the mouth of a patient.

Further, the upper tray 50a and the lower tray 50b are supported by the width control mechanisms 70 and then adjusted in height by the height control mechanisms 60 connecting the tables 80 and the holders 82 and the horizontal state of the tables 80 is precisely adjusted by the jaw gap control mechanisms 90 sliding up and down along the pair of left and right support bars 20 and the front bar 40 to correspond to the inter-jaw relationship.

That is, since the height control mechanisms 60 can adjust the height of the tables 80 coupled to the base plate 10 and the top plate 30 through the holders 82, it is possible to precisely adjust the height to be closer to the actual inter-jaw relationship as compared with tables 80 that are difficult to adjust height in the related art.

Since the width control mechanisms 70 hold the edges of the upper tray 50a or the lower tray 50b with a pressing force while independently adjusting the width of the upper tray 50a or the lower tray 50b on the tables 80 in five directions, it is possible to precisely adjust the width to be closer to the actual inter-jaw relationship as compared with the case in which width is adjusted only at the front and the other parts are fixed.

The jaw gap control mechanisms 90 can adjust the horizontal inclination of the tables 80 at different levels in three directions through the scales 92 on the support bars 20 and 40 when they slide up and down along the support bars 20 and 40 while supporting the tables 80, thus it is possible to precisely adjust the horizontal inclination to be closer to the actual inter-jaw relationship as compared with tables 80 that are difficult to adjust height thereof in the related art.

The present invention is not limited to the embodiment described above and may be changed and modified without departing from the scope of the present invention, and those changes and modifications should be construed as being included in claims.

***Description of reference numerals***

| | |
|---|---|
| 10: Base plate | 12: Fastening member |
| 14: Fixing protrusion | 20: Support bar |
| 22: Hinge block | 24: Hinge shaft |
| 30: Top plate | 32: Fastening member |
| 34: Fixing protrusion | 40: Support bar |
| 42: Fastening member | 44: Base block |
| 50a: Upper tray | 50b: Lower tray |
| 52: First diagnosis temperate | 54: Second diagnosis temperate |
| 56: Connector | 60: Height control mechanism |
| 62: Fixing pin | 64: Connection tube |
| 64a: Insertion hole | 66: Fastening bolt |
| 70: Width control mechanism | 72: Oblong hole |
| 74: Pressing portion | 74a: Threaded shaft |
| 76: Nut | 80: Table |
| 82: Holder | 90: Jaw gap control mechanism |
| 92: Scale | 94: Slider |
| 96: Fastening bolt | 98: Adjusting pin |

## Claims

1. An artificial teeth articulator that includes: a base plate (10); a pair of left and right support bars (20) vertically fixed at left and right sides at a rear portion of the base plate (10); a top plate (30) hinge-coupled to tops of the pair of left and right support bars (20) to rotate up and down; a front support bar (40) vertically coupled to a center of a front portion of the top plate (30), with a lower end seated at a front portion of the base plate (10); and a pair of upper and lower tables (80) detachably coupled to centers of the base plate (10) and the top plate (30) by holders (82), which can be horizontally adjusted, and supporting upper and lower trays (50a and 50b) adjusted for an inter-jaw relationship in the mouth of a patient, the artificial teeth articulator comprising:
height control mechanisms (60) connecting the tables (80) and the holders (82) to each other and adjusting height of the tables (80);
width control mechanisms (70) disposed close to edges of the tables (80) and horizontally supporting and moving the upper and lower trays (50a and 50b) in various directions; and
jaw gap control mechanisms (90) disposed at middle portions of the pair of left and right support bars (20) and the front support bar (40) and adjusting height of the pair of upper and lower tables (80) at different levels to reproduce an inter-jaw relationship adjusted in accordance with the mouth of a patient.

2. The artificial teeth articulator of claim 1, wherein the height control mechanism (60) includes: a fixing pin (62) vertically protruding from a bottom of the table (80), a connection tube (64) having a insertion hole (64a) at an upper end to insert the fixing pin (62) and adjust height and a lower end fixed to the holder (82); and a fastening bolt (66) thread-fastened through a side of an upper part of the connection tube (64) and fixing the fixing pin (62) after the fixing pin is adjusted in height with respect to the connection tube (64).

3. The artificial teeth articulator of claim 1, wherein the width adjustment mechanism (70) includes: a plurality of oblong holes (72) formed along the edge of the table (80), with longitudinal ends facing the center of the table (80); pressing portions (74) having a vertical threaded-shaft (74a) to adjust a width position of the upper tray (50a) or the lower tray (50b) at a center on a top of the table (80) and hold the tray with a pressing force by moving in the oblong holes (72); and nuts (76) thread-fastened to the threaded-shafts (74a) and stopping the pressing portions (74) after the pressing portions are moved on the top of the table (80) by being tightened.

4. The artificial teeth articulator of claim 3, wherein of the oblong holes (72), two are formed at left and right sides of a rear portion of the table (80), one is formed at a center of the front portion, and the other two are formed at left and right sides from a center.

5. The artificial teeth articulator of claim 1, wherein the jaw gap control unit (90) includes: a scale (92) formed at a middle portion of the pair of left and right support bars (20) and the front support bar (40); a slider (94) fitted on the pair of left and right support bars (20) and the front support bar (40) and sliding up and down with an upper end aligned with the scale (92) to adjust height; a fastening bolt (96) thread-fastened through a side of the slider (94) to stop the slider (94) after the height is adjusted; and an adjusting pin (98) horizontally protruding from an upper end of the slider (94), aligned with the upper end of the slider (94), and pushing the table (80) in accordance with an inter-jaw relationship adjusted in accordance with the mouth of a patient.

6. The artificial teeth articulator of claim 5, wherein the scale (92) is formed with 1mm intervals over and under a zero point.
